Europäisches Patentamt

European Patent Office

Office européen des brevets

(19)

(11)  EP 0 915 921 B1

(12)     **EUROPÄISCHE PATENTSCHRIFT**

(45) Veröffentlichungstag und Bekanntmachung des Hinweises auf die Patenterteilung:
**02.10.2002  Patentblatt 2002/40**

(21) Anmeldenummer: **97941904.1**

(22) Anmeldetag: **29.07.1997**

(51) Int Cl.$^7$: **C08F 290/12**, C08F 2/22

(86) Internationale Anmeldenummer:
**PCT/EP97/04127**

(87) Internationale Veröffentlichungsnummer:
**WO 98/005695 (12.02.1998 Gazette 1998/06)**

(54) **VERNETZER FÜR EMULSIONSPOLYMERISATE**

CROSS-LINKING AGENTS FOR EMULSION POLYMERS

RETICULANTS POUR POLYMERES EN EMULSION

(84) Benannte Vertragsstaaten:
**BE DE ES FR GB IT NL**

(30) Priorität: **01.08.1996  DE 19631148**

(43) Veröffentlichungstag der Anmeldung:
**19.05.1999  Patentblatt 1999/20**

(73) Patentinhaber: **BASF AKTIENGESELLSCHAFT
67056 Ludwigshafen (DE)**

(72) Erfinder:
 • **FISCHER, Michael**
   **D-67071 Ludwigshafen (DE)**
 • **LINDENSCHMIDT, Gerhard**
   **D-69181 Leimen (DE)**
 • **MC KEE, Graham, Edmund**
   **D-67433 Neustadt (DE)**
 • **ROSENAU, Bernhard**
   **D-67434 Neustadt (DE)**
 • **NAARMANN, Herbert**
   **D-67227 Frankenthal (DE)**

(74) Vertreter: **Isenbruck, Günter, Dr. et al
Patent- und Rechtsanwälte,
Bardehle-Pagenberg-Dost-Altenburg-Geissler-Isenbruck
Theodor-Heuss-Anlage 12
68165 Mannheim (DE)**

(56) Entgegenhaltungen:
**EP-A- 0 321 403         GB-A- 1 340 026
US-A- 3 895 082         US-A- 3 929 693
US-A- 5 373 034**

**EP 0 915 921 B1**

**Beschreibung**

Die Erfindung betrifft Vernetzer für Emulsionspolymerisate. Insbesondere betrifft die Erfindung die Verwendung bestimmter Vernetzer in teilchenförmigen Emulsionspolymerisaten, vorzugsweise Pfropfcopolymerisaten, sowie diese enthaltende Formmassen und Formkörper daraus.

Für die Herstellung einer Vielzahl von Formkörpern werden thermoplastische Formmassen verwendet, die aus einem Pfropfcopolymerisat in einer Polymermatrix bestehen.

Aus der DE-A-1 260 135 sind thermoplastische Formmassen bekannt, die aus einer Copolymermatrix und einem Pfropfcopolymerisat bestehen. Das Pfropfcopolymerisat enthält einen Kern aus einem Copolymerisat eines Acrylsäureesters eines Alkohols mit 4 - 8 Kohlenstoffatomen und eines Acrylsäureesters des Tricyclodecenylalkohols. Die Schale besteht aus einem Copolymer aus Styrol und Acrylnitril. Die Copolymermatrix besteht aus Styrol und Acrylnitril als Monomereinheiten.

Aus DE-A-1 911 882 sind ähnliche Formmassen aus einem Pfropfcopolymerisat mit einem Acrylsäureesterkern und einer Styrol/Acrylnitril-Schale, eingebettet in eine Copolymermatrix aus Styrol und Acrylnitril, bekannt. Die Pfropfcopolymerisate weisen mittlere Teilchendurchmesser zwischen 150 und 800 nm auf.

Aus der DE-A-2 826 925 sind thermoplastische Formmassen bekannt, die aus einem Pfropfcopolymerisat aus einem vernetzten Acrylsäureesterpolymerisat mit einem mittleren Teilchendurchmesser von etwa 50 - 150 nm und einer Pfropfhülle aus Styrol und Acrylnitril sowie einem weiteren Pfropfcopolymerisat aus einem vernetzten Acrylsäureesterpolymerisat mit einem mittleren Teilchendurchmesser von etwa 200 bis 500 nm und Styrol und Acrylnitril als Pfropfhülle bestehen, wobei die beiden Pfropfcopolymerisate in ein Acrylnitril/Styrol-Copolymerisat eingebracht sind.

In der DE-A-3 227 555 sind thermoplastische Formmassen beschrieben, die Pfropfcopolymerisate enthalten. Die Pfropfgrundlagen bestehen aus vernetzten Polyacrylsäureestern, der Aufbau der Pfropfhülle erfolgt in zwei Stufen, wobei in einer ersten Stufe 20 bis 70 Gew.-% eines vinylaromatischen Monomeren, insbesondere Styrol, und in einer zweiten Stufe 30 bis 80 Gew.-% eines Gemisches eines vinylaromatischen und eines ethylenisch ungesättigten Monomeren, insbesondere Styrols und Acrylnitrils im Gewichtsverhältnis 90:10 bis 60:40 aufgebracht werden. Die Pfropfcopolymerisate liegen in einem Copolymerisat aus Styrol und Acrylnitril vor.

Diese Formmassen sind witterungsbeständig und schlagzäh. Für einige Anwendungen ist die Schlagzähigkeit jedoch zu verbessern.

Aufgabe der vorliegenden Erfindung ist die Bereitstellung von thermoplastischen Formmassen, die ein teilchenförmiges Emulsionspolymerisat in einem amorphen oder teilkristallinen Polymerisat enthalten und eine gegenüber den bekannten Formmassen verbesserte Schlagzähigkeit aufweisen.

Diese Aufgabe wird erfindungsgemäß gelöst durch Verwendung von Verbindungen der allgemeinen Formel (I)

$$H(-CH_2-CR^1R^2)_m(-CH_2-CR^1R^3)_n-H \qquad \text{(I)}$$

in der

$R^1$ H oder Methyl
$R^2$ -C(O)-Y-$R^4$ mit $R^4$ H, Methyl, Ethyl oder Allyl
$R^3$ -C(O)-Y-Allyl
Y O oder NH

oder

$R^1$ H oder $C_{1-20}$-Alkyl
$R^2$ H
$R^3$ (-CH_2-CR^5=CR^6-CH_2)_p-H
mit $R^5$, $R^6$ unabhängig H, Methyl, Ethyl, Chlor,
p = 1 - 100

oder

$R^1$ H
$R^2$ OH oder O-Allyl
$R^3$ O-Allyl

oder

$R^1$ H
$R^2$ OH oder $R^3$
$R^3$ (Meth)acrylat, -O-C(O)-CH=CH-COOH
oder -O-C(O)-$CH_2$-C(=$CH_2$)-COOH

bedeutet und m eine ganze Zahl von 5 bis 500000 und n eine ganze Zahl von 2 bis 100000 ist, als Vernetzer in

2

teilchenförmigen Emulsionspolymerisaten mit einer Glasübergangstemperatur von unterhalb 0°C und einer mittleren Teilchengröße von 50 bis 1000 nm.

Gegenstand der Erfindung sind auch thermoplastische Formmassen, enthaltend, bezogen auf die Summe der Mengen der Komponenten A und B, und ggf. C und/oder D, die ingesamt 100 Gew.-% ergibt,

a: 1 bis 99 Gew.-%, vorzugsweise 15 bis 60 Gew.-%, insbesondere 25 bis 50 Gew.-%, eines teilchenförmigen Emulsionspolymerisats mit einer Glasübergangstemperatur unterhalb von 0°C und einer mittleren Teilchengröße von 50 bis 1000 nm, das 0,5 bis 30 Gew.-%, bezogen auf die Menge der Komponente A, mindestens eines Vernetzers enthält, wie er in Anspruch 1 oder 2 definiert ist, als Komponente A,

b: 1 bis 99 Gew.-%, vorzugsweise 40 bis 85 Gew.-%, insbesondere 50 bis 75 Gew.-%, mindestens eines amorphen oder teilkristallinen Polymerisats als Komponente B,

c: 0 bis 50 Gew.-% Polycarbonate als Komponente C und

d: 0 bis 50 Gew.-% faser- oder teilchenförmige Füllstoffe oder deren Gemische als Komponente D.

Unter einem Tg-Wert (Glasübergangstemperatur) von unterhalb 0°C ist im Falle von Emulsionspolymerisaten mit einem sogenannten "Kern/Schale-Aufbau" zu verstehen, daß diese Polymerisate einen kautschukelastischen Kern (das heißt, eine teilchenförmige Pfropfgrundlage A1) mit einer Glasübergangstemperatur von weniger als 0°C besitzen. Die Schale dieser Polymerisate ist üblicherweise aus einem Polymerisat mit einer Glasübergangstemperatur von mehr als 0°C aufgebaut, oder umgekehrt.

## VERNETZER

Erfindungsgemäß wurde gefunden, daß durch Verwendung bestimmter Vernetzer thermoplastische Formmassen erhalten werden können, die eine verbesserte Schlagzähigkeit gegenüber bekannten Formmassen zeigen.

Dabei werden Verbindungen der allgemeinen Formel (I) verwendet
- Hieran schließen sich unverändert Seiten 5ff -

$$H(-CH_2-CR^1R^2)_m(-CH_2-CR^1R^3)_n-H \qquad\qquad (I)$$

in der
$R^1$ H oder Methyl
$R^2$ -C(O)-Y-$R^4$ mit $R^4$ H, Methyl, Ethyl oder Allyl
$R^3$ -C(O)-Y-Allyl
Y O oder NH
oder
$R^1$ H oder $C_{1-20}$-Alkyl
$R^2$ H
$R^3$ (-CH_2-CR^5=CR^6-CH_2)_p-H
mit $R^5$, $R^6$ unabhängig H, Methyl, Ethyl, Chlor
p = 1 - 100
oder
$R^1$ H
$R^2$ OH oder O-Allyl
$R^3$ O-Allyl
oder
$R^1$ H
$R^2$ OH oder $R^3$
$R^3$ (Meth)acrylat, -O-C(O)-CH=CH-COOH oder -O-C(O)-CH_2-C(=CH_2)-COOH
bedeutet und m eine ganze Zahl von 5 bis 500000 und n eine ganze Zahl von 2 bis 100000 ist.

Vorzugsweise werden dabei Vernetzer der allgemeinen Formel (I) eingesetzt, bei denen m eine ganze Zahl von 500 bis 50000 ist und das Verhältnis n:m 1:50 bis 10:1, vorzugsweise 1:20 bis 1:1, insbesondere 1:10 bis 1:5 beträgt.

Gemäß einer Ausführungsform der Erfindung ist

$R^1$ H oder Methyl,

$R^2$ -C(O)-Y-$R^4$ mit $R^4$ H, Methyl, Ethyl oder Allyl,

$R^3$ -C(O)-Y-Allyl und Y O oder NH.

Vorzugsweise ist Y O, so daß es sich bei den Verbindungen um Poly(meth)acrylate handelt, bei denen zumindest ein Teil der Acrylsäurefunktionen verestert ist mit Allylalkohol. Die verbleibenden (Meth)acrylsäuregruppen können dabei als freie Säuregruppen vorliegen oder bevorzugt als Methyloder Ethylester, insbesondere als Methylester. Hierbei handelt es sich somit anders ausgedrückt um ein Polymethyl(meth)acrylat oder Polyethyl(meth)acrylat, das zumindest teilweise umgeestert ist mit Allylalkohol. Vorzugsweise sind dabei 2 bis 80 Gew.-%, besonders bevorzugt 5 bis 50 Gew.-%, insbesondere 10 bis 15 Gew.-%, bezogen auf Polymethyl(meth)acrylat oder Polyethyl(meth)acrylat, umgeestert mit Allylalkohol.

Das Zahlenmittel des Molekulargewichts der Verbindungen beträgt vorzugsweise 10000 bis 500000, besonders bevorzugt 50000 bis 400000, insbesondere 250000 bis 300000.

Die erfindungsgemäßen Verbindungen, die als Polyallyl(meth)acrylate bzw. Polyallyl(meth)acrylamide bezeichnet werden können, werden hergestellt durch bekannte Veresterungsreaktionen von Poly(meth)acrylsäure bzw. durch Umesterungsreaktionen mit Allylalkohol oder durch Umsetzung von Poly(meth)acrylsäureanhydrid mit Allylalkohol. Unter Verwendung von Allylamin entstehen die entsprechenden Acrylamide bei Umsetzung mit den Estern oder Anhydriden.

Gemäß einer Ausführungsform der Erfindung ist in der Verbindung der allgemeinen Formel (I) $R^1$ H oder $C_{1-20}$-Alkyl, $R^2$ H und $R^3$ (-$CH_2$-$CR^5$=$CR^6$-$CH_2$)$_p$-H mit $R^5$, $R^6$ unabhängig H, Methyl, Ethyl, Chlor, p = 1 - 100.

Vorzugsweise ist dabei $R^1$ H oder $C_{1-6}$-Alkyl, insbesondere H oder $CH_3$, $C_2H_5$, $C_3H_7$ oder $C_4H_9$.

p ist vorzugsweise 1 bis 50, besonders bevorzugt 1 bis 10. Einer der Reste $R^5$, $R^6$ ist vorzugsweise H, der andere Rest H, Methyl oder Chlor.

Bei den Verbindungen handelt es sich vorzugsweise um mit Butadien oder Isopren gepfropfte Ethylene. Dabei kann das Polyethylenrückgrat frei von Verzweigungen sein, oder einen Verzweigungsgrad von 10 bis 500, vorzugsweise 20 bis 100/1000 C-Atome aufweisen.

Vorzugsweise beträgt der Anteil des aufgepfropften Butadiens oder Isoprens 5 bis 80 Gew.-%, besonders bevorzugt 20 bis 70 Gew.-%, insbesondere 40 bis 60 Gew.-%, bezogen auf das Polyethylenrückgrat, das ggf. verzweigt ist. Das Molekulargewicht (Zahlenmittel) der gepfropften Verbindungen beträgt dabei vorzugsweise 10000 bis 2000000, vorzugsweise 100000 bis 1000000, insbesondere 400000 bis 800000.

Die erfindungsgemäßen Verbindungen, die auch als Dienyl-Polyethylene bezeichnet werden können, werden vorzugsweise hergestellt aus vorzugweise mit Lithium metallierten Polyethylenen, die anschließend mit Dienen gepfropft werden, vorzugsweise mit Butadien und/oder Isopren.

Gemäß einer Ausführungsform der Erfindung ist in den Verbindungen der allgemeinen Formel (I) $R^1$ H, $R^2$ OH oder O-Allyl und $R^3$ O-Allyl.

Es handelt sich somit um Polyvinylalkohole, die zumindest teilweise mit Allylgruppen verethert sind. Vorzugsweise beträgt der Veretherungsgrad 1 bis 80 Gew.-%, besonders bevorzugt 5 bis 100 Gew.-%, insbesondere 5 bis 10 Gew.-%, bezogen auf den zugrundeliegenden Polyvinylalkohol.

Die Verbindung weist vorzugsweise ein Zahlenmittel des Molekulargewichts von 10000 bis 2000000, besonders bevorzugt 50000 bis 1000000, insbesondere 400000 bis 800000 auf.

Die erfindungsgemäßen Verbindungen können hergestellt werden durch bekannte Veretherungsverfahren, beispielsweise mit Allylhalogeniden, wie Allylchlorid oder Allylbromid und Polyvinylalkohol. Neben Polyvinylalkohol können allgemein Polyole, Zucker oder Polysaccharide als Veretherungsgrundlage dienen.

Gemäß einer Ausführungsform der Erfindung ist in den Verbindungen der allgemeinen Formel (I) $R^1$ H, $R^2$ OH oder $R^3$ und $R^3$ (Meth)acrylat, -O-C(O)-CH=CH-COOH oder -O-C(O)-$CH_2$C(=$CH_2$)-COOH.

Diese Verbindungen können als Polyvinylalkohole betrachtet werden, die zumindest teilweise mit Acrylsäure oder Methacrylsäure, Maleinsäure usw. verestert sind.

Vorzugsweise ist $R^2$ OH und $R^3$ (Meth)acrylat.

Vorzugsweise beträgt das Zahlenmittel des Molekulargewichts der Verbindung 10000 bis 1000000, besonders bevorzugt 50000 bis 200000, insbesondere 100000 bis 150000.

Der Anteil an Acrylat oder Methacrylat, bezogen auf das Polyvinylalkoholrückgrat beträgt vorzugsweise 5 bis 80 Gew.-%, besonders bevorzugt 10 bis 50 Gew.-%, insbesondere 10 bis 20 Gew.-%.

Die Verbindungen können hergestellt werden durch Umsetzung der entsprechenden Säurechloride oder Anhydride oder Säuren mit Polyvinylalkohol oder anderen geeigneten Polyolen.

Die erfindungsgemäßen sind Vernetzer in teilchenförmigen Emulsionspolymerisaten mit einer Glasübergangstemperatur von unterhalb 0°C und einer mittleren Teilchengröße von 50 bis 1000 nm enthalten. Sie werden dabei in Mengen von 0,5 bis 30 Gew.-%, bevorzugt 0,5 bis 20 Gew.-%, besonders bevorzugt 0,5 bis 5 Gew.-% verwendet, bezogen auf das teilchenförmige Emulsionspolymerisat.

Vorzugweise ist das Emulsionspolymerisat ein Pfropfcopolymerisat aus einer teilchenförmigen Pfropfgrundlage A1 mit einer Glasübergangstemperatur unterhalb von 0°C und einer Pfropfauflage A2 aus vinylaromatischen und/oder ethylenisch ungesättigten Monomeren. Dabei können die erfindungsgemäßen Vernetzer in der Pfropfgrundlage, in der Pfropfauflage oder sowohl in der Pfropfgrundlage, wie auch der Pfropfauflage vorliegen. Vorzugsweise liegen sie in der Pfropfgrundlage vor, in einer Menge von 1 bis 30 Gew.-%, besonders bevorzugt 1 bis 20 Gew.-%, insbesondere 1 bis 5 Gew.-%, bezogen auf die Menge der Pfropfgrundlage aus A1. Die erfindungsgemäßen Vernetzer werden besonders in den nachstehend beschriebenen Formmassen vorteilhaft eingesetzt.

**FORMMASSEN**

Die erfindungsgemäßen Vernetzer werden eingesetzt in thermoplastischen Formmassen enthaltend, bezogen auf die Summe der Mengen der Komponenten A und B, und ggf. C und/oder D, die ingesamt 100 Gew.-% ergibt,

a: 1 bis 99 Gew.-%, vorzugsweise 15 bis 60 Gew.-%, insbesondere 25 bis 50 Gew.-%, eines teilchenförmigen Emulsionspolymerisats mit einer Glasübergangstemperatur unterhalb von 0°C und einer mittleren Teilchengröße von 50 bis 1000 nm, das 0,5 bis 30 Gew.-%, bezogen auf die Mengen der Komponente A, mindestens eines Vernetzers enthält, wie er vorstehend beschrieben ist, als Komponente A,

b: 1 bis 99 Gew.-%, vorzugsweise 40 bis 85 Gew.-%, insbesondere 50 bis 75 Gew.-%, mindestens eines amorphen oder teilkristallinen Polymerisats als Komponente B,

c: 0 bis 50 Gew.-% Polycarbonate als Komponente C und

d: 0 bis 50 Gew.-% faser- oder teilchenförmige Füllstoffe oder deren Gemische als Komponente D.

Die Komponenten A bis D werden nachstehend erläutert.

**Komponente A**

Komponente A ist ein teilchenförmiges Emulsionspolymerisat mit einer Glasübergangstemperatur unterhalb von 0°C und einer mittleren Teilchengröße von 50 bis 1000 nm.
Gemäß einer Ausführungsform der Erfindung beträgt die mittlere Teilchengröße der Komponente A 50 bis 800 nm, vorzugsweise 50 bis 600 nm.
Gemäß einer weiteren erfindungsgemäßen Ausführungsform ist die Teilchengrößenverteilung der Komponente A bimodal, wobei 60 bis 90 Gew.-% eine mittlere Teilchengröße von 50 bis 200 nm und 10 bis 40 Gew.-% eine mittlere Teilchengröße von 50 bis 400 nm aufweisen, bezogen auf das Gesamtgewicht der Komponente A.
Als mittlere Teilchengröße bzw. Teilchengrößenverteilung werden die aus der integralen Massenverteilung bestimmten Größen angegeben. Bei den erfindungsgemäßen mittleren Teilchengrößen handelt es sich in allen Fällen um die Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$ und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind.
Der Quotient

$$\frac{d_{90} - d_{10}}{d_{50}} = Q$$

stellt ein Maß für die Verteilungsbreite der Teilchengröße dar. Als Komponente A erfindungsgemäß verwendbare Emulsionspolymerisate A weisen vorzugsweise Q-Werte kleiner als 0,5, insbesondere kleiner als 0,35 auf.
Die Glasübergangstemperatur des Emulsionspolymerisats A wie auch der anderen erfindungsgemäß verwendeten Komponenten wird mittels DSC (Differential Scanning Calorimetry) nach ASTM 3418 (mid point temperature) bestimmt.

Als Emulsionspolymerisat A können einschlägig übliche Kautschuke Verwendung finden, die mit den erfindungsgemäßen Vernetzern vernetzt werden können, wie gemäß einer Ausführungsform der Erfindung, Epichlorhydrin-Kautschuke, Ethylen-Vinylacetat-Kautschuke, Polyethylenchlorsulfonkautschuke, Siliconkautschuke, Polyetherkautschuke, hydrierte Dienkautschuke, Polyalkenamerkautschuke, Acrylatkautschuke, Ethylen-Propylen-Kautschuke, Ethylen-Propylen-Dien-Kautschuke, Butylkautschuke und Fluorkautschuke. Bevorzugt werden Acrylatkautschuk, Ethylen-Propylen(EP)-Kautschuk, Ethylen-Propylen-Dien(EPDM)-Kautschuk, insbesondere Acrylatkautschuk, eingesetzt.

Gemäß einer Ausführungsform wird der Dien-Grundbaustein-Anteil im Emulsionspolymerisat A so gering gehalten, daß möglichst wenig nicht umgesetzte Doppelbindungen im Polymerisat verbleiben. Gemäß einer Ausführungsform liegen keine Dien-Grundbausteine im Emulsionspolymerisat A vor.

Bei den Acrylatkautschuken handelt es sich vorzugsweise um Alkylacrylat-Kautschuke aus einem oder mehreren $C_{1-8}$-Alkylacrylaten, vorzugsweise $C_{4-8}$-Alkylacrylaten, wobei bevorzugt mindestens teilweise Butyl-, Hexyl-, Octyloder 2-Ethylhexylacrylat, insbesondere n-Butyl- und 2-Ethylhexylacrylat, verwendet wird. Neben den Alkylacrylat-Kautschuken können bis zu 49 Gew.-%, vorzugsweise bis zu 10 Gew.-%, bezogen auf Komponente A, nachstehende Komponenten A21 und A22 oder Maleinsäureanhydrid, insbesondere harte Polymere bildende Monomere, wie Vinylacetat, (Meth)acrylnitril, Styrol, substituiertes Styrol, Methylmethacrylat, Vinylether in Komponente A einpolymerisiert sein.

Komponente A enthält dabei 0,5 bis 30 Gew.-%, vorzugsweise 0,5 bis 20 Gew.-%, insbesondere 0,5 bis 5 Gew.-%, bezogen auf die gesamte Komponente A, mindestens eines Vernetzers, wie er vorstehend beschrieben ist.

Die Acrylatkautschuke können gemäß einer Ausführungsform der Erfindung weiterhin 0 bis 10 Gew.-%, vorzugsweise 0,1 bis 5 Gew.-%, an weiteren vernetzend wirkenden, polyfunktionellen Monomeren (Vernetzungsmonomere) enthalten. Beispiele hierfür sind Monomere, die 2 oder mehr zur Copolymerisation befähigte Doppelbindungen enthalten, die vorzugsweise nicht in den 1,3-Stellungen konjugiert sind.

Geeignete weitere Vernetzungsmonomere sind beispielsweise Divinylbenzol, Diallylmaleat, Diallylfumarat, Diallylphthalat, Diethylphthalat, Triallylcyanurat, Triallylisocyanurat, Tricyclodecenylacrylat, Dihydrodicyclopentadienylacrylat, Triallylphosphat, Allylacrylat, Allylmethacrylat. Als besonders günstiges Vernetzungsmonomer hat sich Dicyclopentadienylacrylat (DCPA) erwiesen (vgl. DE-C-12 60 135).

Geeignete Siliconkautschuke können z.B. vernetzte Siliconkautschuke aus Einheiten der allgemeinen Formeln $R_2SiO$, $RSiO_{3/2}$, $R_3SiO_{1/2}$ und $SiO_{2/4}$ sein, wobei der Rest R einen einwertigen Rest darstellt. Die Menge der einzelnen Siloxaneinheiten sind dabei so bemessen, daß auf 100 Einheiten der Formel $R_2SiO$ 0 bis 10 Mol-Einheiten der Formel $RSiO_{3/2}$, 0 bis 1,5 Mol-Einheiten $R_3SiO_{1/2}$ und 0 bis 3 Mol-Einheiten $SiO_{2/4}$ vorhanden sind. R kann dabei entweder ein einwertiger gesättigter Kohlenwasserstoffrest mit 1 bis 18 C-Atomen, der Phenylrest oder der Alkoxyrest oder eine radikalisch leicht angreifbare Gruppe wie der Vinyl- oder der Mercaptopropylrest sein. Bevorzugt ist, daß mindestens 80% aller Reste R Methylreste sind; insbesondere bevorzugt sind Kombinationen aus Methyl- und Ethyloder Phenylresten.

Bevorzugte Siliconkautschuke enthalten eingebaute Einheiten radikalisch angreifbarer Gruppen, insbesondere Vinyl-, Allyl-, Halogen-, Mercaptogruppen, vorzugsweise in Mengen von 2 - 10 mol-%, bezogen auf alle Reste R. Sie können beispielsweise hergestellt werden wie in EP-A-0 260 558 beschrieben.

**Kern/Schale - Emulsionspolymerisat A**

Bei dem Emulsionspolymerisat A kann es sich auch um ein mehrstufig aufgebautes Polymerisat handeln (sog. "Kern/Schale-Aufbau", "core-shell morphology"). Beispielsweise kann ein kautschukelastischer Kern ($T_g < 0°C$) von einer "harten" Schale (Polymere mit $T_g > 0°C$) oder umgekehrt umhüllt sein.

In einer besonders bevorzugten Ausgestaltung der Erfindung handelt es sich bei der Komponente A um ein Pfropfcopolymerisat. Die Pfropfcopolymerisate A der erfindungsgemäßen Formmassen haben dabei eine mittlere Teilchengröße $d_{50}$ von 50 bis 1000 nm, bevorzugt von 50 bis 600 nm und besonders bevorzugt von 50 bis 400 nm. Diese Teilchengrößen können erzielt werden, wenn man als Pfropfgrundlage A1 dieser Komponente A Teilchengrößen von 50 bis 350 nm, bevorzugt von 50 bis 300 nm und besonders bevorzugt von 50 bis 250 nm verwendet.

Das Pfropfcopolymerisat A ist im allgemeinen ein- oder mehrstufig, d.h. ein aus einem Kern und einer oder mehreren Hüllen aufgebautes Polymerisat. Das Polymerisat besteht aus einer Grundstufe (Pfropfkern) A1 und einer oder - bevorzugt - mehreren darauf gepfropften Stufen A2 (Pfropfauflage), den sogenannten Pfropfstufen oder Pfropfhüllen.

Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z.B. EP-A-0 230 282, DE-A-0 36 01 419, EP-A-0 269 861).

In einer bevorzugten Ausführungsform besteht Komponente A aus einem mehrstufig aufgebauten Pfropfcopolymerisat, wobei die Pfropfstufen im allgemeinen aus harzbildenden Monomeren hergestellt sind und eine Glastemperatur $T_g$ oberhalb von 30°C, vorzugsweise oberhalb von 50°C haben. Der mehrstufige Aufbau dient u.a. dazu, eine (Teil-)Verträglichkeit der Kautschukteilchen A mit dem Thermoplasten B zu erzielen.

Pfropfcopolymerisate A werden beispielsweise hergestellt durch Pfropfung von mindestens einem der im folgenden aufgeführten Monomeren A2 auf mindestens eine der vorstehend aufgeführten Pfropfgrundlagen bzw. Pfropfkernmaterialien A1. Als Pfropfgrundlagen A1 der erfindungsgemäßen Formmassen sind alle Polymerisate geeignet, die oben unter den Emulsionspolymerisaten A beschrieben sind.

Gemäß einer Ausführungsform ist Komponente A ein Pfropfcopolymerisat mit einer Glasübergangstemperatur unterhalb von 0°C und einer mittleren Teilchengröße von 50 bis 1000 nm, aufgebaut aus einer teilchenförmigen Pfropfgrundlage A1 mit einer Glasübergangstemperatur unterhalb von 0°C, die 1 bis 20 Gew.-% mindestens eines Vernetzers enthält, wie er vorstehend definiert ist, und einer Pfropfauflage A2 aus vinylaromatischen und/oder ethylenisch ungesättigten Monomeren.

Vorzugsweise handelt es sich bei Komponente A um ein Pfropfcopolymerisat aus

a1:     1 - 99 Gew.-%, vorzugsweise 55 bis 80 Gew.-%, insbesondere 55 bis 65 Gew.-%, einer teilchenförmigen Pfropfgrundlage A1 aus den Monomeren, bezogen auf A1

a11:    50 bis 99 Gew.-% eines $C_{1-8}$-Alkylesters der Acrylsäure, vorzugsweise n-Butylacrylat und/oder Ethylhexylacrylat als Komponente A11,

a12:    1 bis 20 Gew.-% mindestens eines Vernetzers, wie er in Anspruch 1 oder 2 definiert ist, als Komponente A12,

a13:    0 bis 49 Gew.-% der Komponenten A21 und/oder A22 und/oder Maleinsäureanhydrid als Komponente A13,

a14:    0 bis 10 Gew.-% mindestens eines weiteren polyfunktionellen vernetzenden Monomeren als Komponente A14,

wobei die Summe der Mengen der Komponenten A11, A12 und ggf. A13 und/oder A14 100 Gew.-% ergibt,

a2:     1 bis 99 Gew.-%, vorzugsweise 20 bis 45 Gew.-%, insbesondere 35 bis 45 Gew.-%, einer Pfropfauflage A2 aus den Monomeren, bezogen auf A2,

a21:    40 bis 100 Gew.-%, vorzugsweise 65 bis 85 Gew.-%, Einheiten eines vinylaromatischen Monomeren, vorzugsweise des Styrols, eines substituierten Styrols oder eines (Meth)acrylsäureesters oder deren Gemische, insbesondere des Styrols und/oder $\alpha$-Methylstyrols als Komponente A21 und

a22:    bis 60 Gew.-%, vorzugsweise 15 bis 35 Gew.-%, Einheiten eines ethylenisch ungesättigten Monomeren, vorzugsweise des Acrylnitrils oder Methacrylnitrils, insbesondere des Acrylnitrils als Komponente A22,

wobei die Pfropfauflage A2 aus mindestens einer Pfropfhülle besteht.

Vorzugsweise wird keine Komponente A14 eingesetzt.

Vorzugsweise werden 75 bis 99 Gew.-% der Komponente A11 und 1 bis 20 Gew.-% der Komponente A12 eingesetzt, besonders bevorzugt 90 bis 99 Gew.-% der Komponente A11 und 1 bis 5 Gew.-% der Komponente A12.

Insbesondere ist dabei Komponente A11 n-Butylacrylat.

Geeignete Monomere zur Bildung der Pfropfauflage A2 können beispielsweise aus den im folgenden aufgeführten Monomeren und deren Gemischen ausgewählt sein:

Vinylaromatische Monomeren A21, wie Styrol und seine substituierten Derivate, wie $\alpha$-Methylstyrol, p-Methylstyrol, 3,4-Dimethylstyrol, p-tert.-Butylstyrol, o- und p-Divinylbenzol und p-Methyl-$\alpha$-Methylstyrol oder $C_1$-$C_8$-Alkyl(meth)acrylate wie Methylmethacrylat, Ethylmethacrylat, Methylacrylat, Ethylacrylat, n-Butylacrylat, s-Butylacrylat; bevorzugt sind Styrol, $\alpha$-Methylstyrol, Methylmethacrylat, insbesondere Styrol und/oder $\alpha$-Methylstyrol, und ethylenisch ungesättigte Monomeren A22, wie Acryl- und Methacrylverbindungen, wie z.B. Acrylnitril, Methacrylnitril, Acryl- und Methacrylsäure, Methylacrylat, Ethylacrylat, n- und Isopropylacrylat, n- und Isobutylacrylat, tert.-Butylacrylat, 2-Ethylhexylacrylat, Methylmethacrylat, Ethylmethacrylat, n- und Isopropylmethacrylat, n- und Isobutylmethacrylat, tert.-Butylmethacrylat, Cyclohexylmethacrylat, Isobornylmethacrylat, Maleinsäureanhydrid und dessen Derivate, wie Maleinsäureester, Maleinsäurediester und Maleinimide, z.B. Alkyl- und Arylmaleinimide, wie Methyl- oder Phenylmaleinimid. Bevorzugt sind Acrylnitril und Methacrylnitril, insbesondere Acrylnitril.

Weiterhin können als (Co-) Monomeren Styrol-, Vinyl-, Acryl- oder Methacrylverbindungen (z.B. Styrol, wahlweise substituiert mit $C_{1-12}$-Alkylresten, Halogenatomen, Halogenmethylenresten; Vinylnaphthalin, Vinylcarbazol;

Vinylether mit $C_{1-12}$-Etherresten; Vinylimidazol, 3-(4-)Vinylpyridin, Dimethylaminoethyl(meth)acrylat, p-Dimethylaminostyrol, Acrylnitril, Methacrylnitril, Acrylsäure, Methacrylsäure, Acrylsäurebutylester, Acrylsäureethylhexylester und Methylmethacrylat sowie Fumarsäure, Maleinsäure, Itaconsäure oder deren Anhydride, Amide, Nitrile oder Ester mit 1 bis 22 C-Atome, vorzugsweise 1 bis 10 C-Atome enthaltenden Alkoholen) verwendet werden.

Gemäß einer Ausführungsform der Erfindung umfaßt Komponente A 50 bis 90 Gew.-% der vorstehend beschriebenen Pfropfgrundlage A1 und 10 bis 50 Gew.-% der vorstehend beschriebenen Pfropfauflage A2, bezogen auf das Gesamtgewicht der Komponente A.

Gemäß einer Ausführungsform der Erfindung dienen als Pfropfgrundlage A1 vernetzte Acrylsäureester-Polymerisate mit einer Glasübergangstemperatur unter 0°C. Die vernetzten Acrylsäureester-Polymerisate sollen vorzugsweise eine Glasübergangstemperatur unter -20°C, insbesondere unter -30°C, besitzen.

In einer bevorzugten Ausführungsform besteht die Pfropfauflage A2 aus mindestens einer Pfropfhülle und die äußerste Pfropfhülle davon hat eine Glasübergangstemperatur von mehr als 30°C, wobei ein aus den Monomeren der Pfropfauflage A2 gebildetes Polymer eine Glasübergangstemperatur von mehr als 80°C aufweisen würde.

Bezüglich der Messung der Glasübergangstemperatur und der mittleren Teilchengröße sowie der Q-Werte gilt für die Pfropfcopolymerisate A das für die Emulsionspolymerisate A Gesagte.

Die Pfropfcopolymerisate A können auch durch Pfropfung von vorgebildeten Polymeren auf geeignete Pfropfhomopolymerisate hergestellt werden. Beispiele dafür sind die Umsetzungsprodukte von Maleinsäureanhydrid- oder Säuregruppen enthaltenden Copolymeren mit basenhaltigen Kautschuken.

Geeignete Herstellverfahren für Pfropfcopolymerisate A sind die Emulsions-, Lösungs-, Masse- oder Suspensionspolymerisation. Bevorzugt werden die Pfropfcopolymerisate A durch radikalische Emulsionspolymerisation hergestellt, insbesondere in Gegenwart von Latices der Komponente A1 bei Temperaturen von 20°C bis 90°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C.

Geeignete Emulsionspolymerisationsverfahren sind beschrieben in den DE-A-28 26 925, 31 49 358 und in der DE-C-12 60 135.

Der Aufbau der Pfropfhüllen erfolgt vorzugsweise im Emulsionspolymerisationsverfahren, wie es beschrieben ist in DE-A-32 27 555, 31 49 357, 31 49 358, 34 14 118. Das definierte Einstellen der erfindungsgemäßen Teilchengrößen von 50 bis 1000 nm erfolgt bevorzugt nach den Verfahren, die beschrieben sind in der DE-C-12 60 135 und DE-A-28 26 925, bzw. Applied Polymer Science, Band 9 (1965), Seite 2929. Das Verwenden von Polymerisaten mit unterschiedlichen Teilchengrößen ist beispielsweise bekannt aus DE-A-28 26 925 und US 5,196,480.

Gemäß dem in der DE-C-12 60 135 beschriebenen Verfahren wird zunächst die Pfropfgrundlage A1 hergestellt, indem der oder die gemäß einer Ausführungsform der Erfindung verwendeten Acrylsäureester und das mehrfunktionelle, die Vernetzung bewirkende Monomere, ggf. zusammen mit den weiteren Comonomeren, in wäßriger Emulsion in an sich bekannter Weise bei Temperaturen zwischen 20 und 100°C, vorzugsweise zwischen 50 und 80°C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 bis 5 Gew.-%, insbesondere von 1 bis 2 Gew.-%, bezogen auf die bei der Herstellung der Pfropfgrundlage A1 eingesetzten Monomeren, eingesetzt. Im allgemeinen wird bei einem Gewichtsverhältnis von Wasser zu Monomeren von 2 : 1 bis 0,7 : 1 gearbeitet. Als Polymerisationsinitiatoren dienen insbesondere die gebräuchlichen Persulfate, wie Kaliumpersulfat. Es können jedoch auch Redoxsysteme zum Einsatz gelangen. Die Initiatoren werden im allgemeinen in Mengen von 0,1 bis 1 Gew.-%, bezogen auf die bei der Herstellung der Pfropfgrundlage A1 eingesetzten Monomeren, eingesetzt. Als weitere Polymerisationshilfsstoffe können die üblichen Puffersubstanzen, durch welche pH-Werte von vorzugsweise 6 bis 9 eingestellt werden, wie Natriumbicarbonat und Natriumpyrophosphat, sowie 0 bis 3 Gew.-% eines Molekulargewichtsreglers, wie Mercaptane, Terpinole oder dimeres $\alpha$-Methylstyrol, bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, daß der erhaltene Latex des vernetzten Acrylsäureesterpolymerisats einen $d_{50}$-Wert im Bereich von etwa 50 - 1000 nm, vorzugsweise 50 bis 150 nm, besonders bevorzugt im Bereich von 80 bis 100 nm, besitzt. Die Teilchengrößenverteilung des Latex soll dabei vorzugsweise eng sein. Der Quotient Q soll < 0,5, vorzugsweise < 0,35 sein.

Zur Herstellung des Pfropfpolymerisats A wird sodann in einem nächsten Schritt in Gegenwart des so erhaltenen Latex des vernetzten Acrylsäureester-Polymerisats gemäß einer Ausführungsform der Erfindung ein Monomerengemisch aus Styrol und Acrylnitril polymerisiert, wobei das Gewichtsverhältnis von Styrol zu Acrylnitril in dem Monomerengemisch gemäß einer Ausführungsform der Erfindung im Bereich von 100 : 0 bis 40 : 60, vorzugsweise im Bereich von 65 : 35 bis 85 : 15, liegen soll. Es ist vorteilhaft, diese Pfropfcopolymerisation von Styrol und Acrylnitril auf das als Pfropfgrundlage dienende vernetzte Polyacrylsäureesterpolymerisat wieder in wäßriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage A1, wobei, falls notwendig, weiterer Emulgator und Initiator zugegeben werden kann. Das gemäß einer Ausführungsform der Erfindung aufzupfropfende Monomerengemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfcopolymerisation des Gemisches von Styrol und Acrylnitril in Gegenwart des vernetzenden Acrylsäureesterpolymerisats wird so geführt, daß ein Pfropfgrad von 1 bis 99 Gew.-%, vorzugsweise 20 bis 45 Gew.-%, insbesondere 35 bis 45 Gew.-%, bezogen auf das Gesamtgewicht der Komponente A, im Pfropfcopolymerisat A resultiert. Da die Pfropfausbeute bei der Pfropfcopolymerisation nicht 100% beträgt, muß eine etwas größere Menge des Monomerengemisches aus Styrol und Acrylnitril bei der Pfropfcopolymerisation eingesetzt werden, als es dem gewünschten Pfropfgrad entspricht. Die Steuerung der Pfropfausbeute bei der Pfropfcopolymerisation und somit des Pfropfgrades des fertigen Pfropfcopolymerisats A ist dem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfcopolymerisation entstehen im allgemeinen etwa 5 bis 15 Gew.-%, bezogen auf das Pfropfcopolymerisat, an freiem, ungepfropftem Styrol/Acrylnitril-Copolymerisat. Der Anteil des Pfropfcopolymerisats A in dem bei der Pfropfcopolymerisation erhaltenen Polymerisationsprodukt wird nach der oben angegebenen Methode ermittelt.

Bei der Herstellung der Pfropfcopolymerisate A nach dem Emulsionsverfahren sind neben den gegebenen verfahrenstechnischen Vorteilen auch reproduzierbare Teilchengrößenveränderungen möglich, beispielsweise durch zumindest teilweise Agglomeration der Teilchen zu größeren Teilchen. Dies bedeutet, daß in den Pfropfcopolymerisaten A auch Polymere mit unterschiedlichen Teilchengrößen vorliegen können.

Vor allem die Komponente A aus Pfropfgrundlage und Pfropfhülle(n) kann für den jeweiligen Verwendungszweck optimal angepaßt werden, insbesondere in bezug auf die Teilchengröße.

Die Pfropfcopolymerisate A enthalten im allgemeinen 1 bis 99 Gew.-%, bevorzugt 55 bis 80 und besonders bevorzugt 55 - 65 Gew.-% Pfropfgrundlage A1 und 1 bis 99 Gew.-%, bevorzugt 20 bis 45, besonders bevorzugt 35 bis 45 Gew.-% der Pfropfauflage A2, jeweils bezogen auf das gesamte Pfropfcopolymerisat.

## KOMPONENTE B

Komponente B ist ein amorphes oder teilkristallines Polymerisat.

Vorzugsweise handelt es sich bei Komponente B um ein Copolymerisat aus

b1:	40 bis 100 Gew.-%, vorzugsweise 60 bis 70 Gew.-%, Einheiten eines vinylaromatischen Monomeren, vorzugsweise des Styrols, eines substituierten Styrols oder eines (Meth)acrylsäureesters oder deren Gemische, insbesondere des Styrols und/oder $\alpha$-Methylstyrols als Komponente B1,

b2:	bis 60 Gew.-%, vorzugsweise 30 bis 40 Gew.-%, Einheiten eines ethylenisch ungesättigten Monomeren, vorzugsweise des Acrylnitrils oder Methacrylnitrils, insbesondere des Acrylnitrils als Komponente B2.

Gemäß einer bevorzugten Ausführungsform der Erfindung beträgt die Viskositätszahl der Komponente B 50 bis 90, vorzugsweise 60 bis 80.

Gemäß einer Ausführungsform der Erfindung ist Komponente B dabei aus 50 bis 99 Gew.-% vinylaromatischen Monomeren und 1 bis 50 Gew.-% mindestens eines der weiteren Monomeren aufgebaut, ausgewählt aus Olefinen, wie Ethylen, Propylen, 1-Buten, 1-Penten, 1-Hexen, 1-Hepten, 3-Methyl-1-buten, 4-Methyl-1-buten, 4-Methyl-1-penten, 1-Octen.

Vorzugsweise ist Komponente B ein amorphes Polymerisat, wie es vorstehend als Pfropfauflage A2 beschrieben ist. Gemäß einer Ausführungsform der Erfindung wird als Komponente B ein Copolymerisat von Styrol und/oder $\alpha$-Methylstyrol mit Acrylnitril verwendet. Der Acrylnitrilgehalt in diesen Copolymerisaten der Komponente B beträgt dabei 0 bis 60 Gew.-%, vorzugsweise 30 bis 40 Gew.-%, bezogen auf das Gesamtgewicht der Komponente B. Zur Komponente B zählen auch die bei der Pfropfcopolymerisation zur Herstellung der Komponente A entstehenden freien, nicht gepfropften Styrol/Acrylnitril-Copolymerisate. Je nach den bei der Pfropfcopolymerisation für die Herstellung des Pfropfcopolymerisats A gewählten Bedingungen kann es möglich sein, daß bei der Pfropfcopolymerisation schon ein hinreichender Anteil an Komponente B gebildet worden ist. Im allgemeinen wird es jedoch erforderlich sein, die bei der Pfropfcopolymerisation erhaltenen Produkte mit zusätzlicher, separat hergestellter Komponente B abzumischen.

Bei dieser zusätzlichen, separat hergestellten Komponente B kann es sich vorzugsweise um ein Styrol/Acrylnitril-Copolymerisat, ein $\alpha$-Methylstyrol/ Acrylnitril-Copolymerisat oder ein a-Methylstyrol/Styrol/Acrylnitril-Terpolymerisat handeln. Diese Copolymerisate können einzeln oder auch als Gemisch für die Komponente B eingesetzt werden, so daß es sich bei der zusätzlichen, separat hergestellten Komponente B der erfindungsgemäß verwendeten Formmassen beispielsweise um ein Gemisch aus einem Styrol/Acrylnitril-Copolymerisat und einem $\alpha$-Methylstyrol/Acrylnitril-Copolymerisat handeln kann. In dem Fall, in dem die Komponente B der erfindungsgemäß verwendeten Formmassen aus einem Gemisch aus einem Styrol/Acrylnitril-Copolymerisat und einem $\alpha$-Methylstyrol/Acrylnitril-Copolymerisat

besteht, sollte vorzugsweise der Acrylnitrilgehalt der beiden Copolymerisate um nicht mehr als 10 Gew.-%, vorzugsweise nicht mehr als 5 Gew.-%, bezogen auf das Gesamtgewicht des Copolymerisats, voneinander abweichen. Die Komponente B der erfindungsgemäß verwendeten Formmassen kann jedoch auch nur aus einem einzigen Styrol/Acrylnitril-Copolymerisat bestehen, wenn bei den Pfropfcopolymerisationen zur Herstellung der Komponente A als auch bei der Herstellung der zusätzlichen, separat hergestellten Komponente B von dem gleichen Monomergemisch aus Styrol und Acrylnitril ausgegangen wird.

Die zusätzliche, separat hergestellte Komponente B kann nach den herkömmlichen Verfahren erhalten werden. So kann gemäß einer Ausführungsform der Erfindung die Copolymerisation des Styrols und/oder $\alpha$-Methylstyrols mit dem Acrylnitril in Masse, Lösung, Suspension oder wäßriger Emulsion durchgeführt werden. Die Komponente B hat vorzugsweise eine Viskositätszahl von 40 bis 100, bevorzugt 50 bis 90, insbesondere 60 bis 80. Die Bestimmung des Viskositätszahl erfolgt dabei nach DIN 53 726, dabei werden 0,5 g Material in 100 ml Dimethylformamid gelöst.

In einer bevorzugten Ausführungsform enthalten die Formmassen neben den Komponenten A und B zusätzliche Komponenten C und/oder D, sowie ggf. weitere Zusatzstoffe, wie im folgenden beschrieben.

## KOMPONENTE C

Geeignete Polycarbonate C sind an sich bekannt. Sie haben vorzugsweise ein Molekulargewicht (Gewichtsmittelwert $M_W$, bestimmt mittels Gelpermeationschromatographie in Tetrahydrofuran gegen Polystyrolstandards) im Bereich von 10 000 bis 60 000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bervorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4'-Dihydroxydiphenyl oder Dihydroxydiphenylcycloalkane, bevorzugt Dihydroxydiphenylcyclohexane oder Dihydroxydiphenylcyclopentane, insbesondere 1,1-Bis(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxyverbindungen.

Es können auch Copolycarbonate gemäß der US 3,737,409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen. Ferner ist es möglich, Mischungen unterschiedlicher Polycarbonate einzusetzen.

Die mittleren Molekulargewichte (Gewichtsmittelwert $M_W$, bestimmt mittels Gelpermeationschromatographie in Tetrahydrofuran gegen Polystyrolstandards) der Polycarbonate C liegen erfindungsgemäß im Bereich von 10 000 bis 64 000 g/mol. Bevorzugt liegen sie im Bereich von 15 000 bis 63 000, insbesondere im Bereich von 15 000 bis 60 000 g/mol. Dies bedeutet, daß die Polycarbonate C relative Lösungsviskositäten im Bereich von 1,1 bis 1,3, gemessen in 0,5 gew.-%iger Lösung in Dichlormethan bei 25°C, bevorzugt von 1,15 bis 1,33, haben. Vorzugsweise unterscheiden sich die relativen Lösungsviskositäten der eingesetzten Polycarbonate um nicht mehr als 0,05, insbesondere nicht mehr als 0,04.

Die Polycarbonate C können sowohl als Mahlgut als auch in granulierter Form eingesetzt werden. Sie liegen als Komponente C in Mengen von 0 bis 50 Gew.-%, bevorzugt von 10 bis 40 Gew.-%, jeweils bezogen auf die gesamte Formmasse, vor.

Der Zusatz von Polycarbonaten führt gemäß einer Ausführungsform der Erfindung unter anderem zu höherer Thermostabilität und verbesserter Rißbeständigkeit der Formmassen.

## KOMPONENTE D

Als Komponente D enthalten die bevorzugten erfindungsgemäßen thermoplastischen Formmassen 0 bis 50 Gew.-%, vorzugsweise 0 bis 40 Gew.-%, insbesondere 0 bis 30 Gew.-% faser- oder teilchenförmige Füllstoffe oder deren Mischungen, jeweils bezogen auf die gesamte Formmasse. Dabei handelt es sich vorzugsweise um kommerziell erhältliche Produkte. Verstärkungsmittel wie Kohlenstoffasern und Glasfasern werden üblicherweise in Mengen von 5 bis 50 Gew.-% verwendet, bezogen auf die gesamte Formmasse.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern (staple) mit einer Länge von 1 bis 10 µm, vorzugsweise 3 bis 6 µm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem können Metallflocken (z.B. Aluminiumflocken der Fa. Transmet Corp.), Metallpulver, Metallfasern, metallbeschichtete Füllstoffe, z.B. nickelbeschichtete Glasfasern sowie andere Zuschlagstoffe, die elektromagnetische Wellen abschirmen, den erfindungsgemäßen Formmassen beigemischt werden. Insbesondere kommen Aluminiumflocken (K 102 der Fa. Transmet) für EMI-Zwecke (electro-magnetic interference) in Betracht. Ferner können die Massen mit zusätzlichen Kohlenstoffasern, Ruß, insbesondere Leitfähigkeitsruß, oder nickelbeschichteten C-Fasern vermischt werden.

Die erfindungsgemäßen Formmassen können ferner weitere Zusatzstoffe enthalten, die für Polycarbonate, SAN-Polymerisate und Pfropfcopolymerisate oder deren Mischungen typisch und gebräuchlich sind. Als solche Zusatzstoffe seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Geeignete Stabilisatoren sind die üblichen gehinderten Phenole, aber auch Vitamin E bzw. analog aufgebaute Verbindungen. Auch HALS-Stabilisatoren (Hindered Amine Light Stabilizers), Benzophenone, Resorcine, Salicylate, Benzotriazole und andere Verbindungen sind geeignet (beispielsweise Irganox®, Tinuvin®, wie Tinuvin® 770 (HALS-Absorber, Bis (2,2,6,6-tetramethyl-4-piperidyl)sebazat) oder Tinuvin®P (UV-Absorber - (2H-Benzotriazol-2-yl-4-methylphenol), Topanol®). Diese werden üblicherweise in Mengen bis zu 2 Gew.-% (bezogen auf das Gesamtgemisch) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 - 30 Kohlenstoffatomen. Die Mengen dieser Zusätze liegen im Bereich von 0,05 bis 1 Gew.-%.

Auch Siliconöle, oligomeres Isobutylen oder ähnliche Stoffe kommen als Zusatzstoffe in Frage, die üblichen Mengen betragen 0,05 bis 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel und Stabilisatoren wie UV-Stabilisatoren, Schmiermittel und Antistatika werden üblicherweise in Mengen von 0,01 bis 5 Gew.-% verwendet, bezogen auf die gesamte Formmasse.

Die Herstellung der erfindungsgemäßen thermoplastischen Formmassen kann nach an sich bekannten Verfahren durch Mischen der Komponenten erfolgen. Es kann vorteilhaft sein, einzelne Komponenten vorzumischen. Auch das Mischen der Komponenten in Lösung und Entfernen der Lösungsmittel ist möglich.

Wenn die Komponenten A und B beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Die in wäßriger Dispersion erhaltenen Produkte der Pfropfcopolymerisation (Komponente A) können auch nur teilweise entwässert werden und als feuchte Krümel mit der Komponente B vermischt werden, wobei dann während des Vermischens die vollständige Trocknung der Pfropfcopolymerisate erfolgt.

Geeignete organische Lösungsmittel sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten kann nach allen bekannten Methoden erfolgen. Vorzugsweise geschieht jedoch das Mischen der Komponenten A, B und ggf. C und D durch gemeinsames Extrudieren, Kneten oder Verwalzen der Komponenten, bei Temperaturen von 180 bis 400°C, wobei die Komponenten notwendigenfalls zuvor aus der bei der Polymerisation erhaltenen Lösung oder aus der wäßrigen Dispersion isoliert worden sind.

Dabei können die Komponenten gemeinsam oder getrennt/nacheinander eindosiert werden.

Aus den erfindungsgemäßen Formmassen können gemäß einer Ausrührungsform der Erfindung Formkörper nach den bekannten Verfahren der Thermoplastverarbeitung hergestellt werden. Insbesondere kann die Herstellung durch Thermoformen, Extrudieren, Spritzgießen, Kalandrieren, Hohlkörperblasen, Pressen, Preßsintern, Tiefziehen oder Sintern erfolgen.

Die Erfindung betrifft ferner Formkörper aus den erfindungsgemäßen Formmassen. Durch Verwendung der erfindungsgemäßen Vernezter wird die Schlagzähigkeit der Formmassen bzw. Formkörper verbessert.

Insbesondere Formkörper aus Formmassen, die als Komponente C Polycarbonate enthalten, sind sehr wärmeformbeständig und widerstandsfähig gegen anhaltende Wärme. Durch Zusatz des Polycarbonats als Komponente C wird dabei die Wärmeformbeständigkeit und Schlagzähigkeit der Formkörper weiter verbessert. Diese Formkörper weisen zudem ein ausgewogenes Verhältnis von Zähigkeit und Steifigkeit und eine gute Dimensionsstabilität auf sowie eine hervorragende Widerstandsfähigkeit gegen Wärmealterung und eine hohe Vergilbungsbeständigkeit bei thermischer Belastung und Einwirkung von UV-Strahlung.

Weitere vorteilhafte Eigenschaften der Formkörper sind die hohe Witterungsstabilität, gute thermische Beständigkeit, hohe Vergilbungsbeständigkeit bei UV-Bestrahlung und thermischer Belastung, gute Spannungsrißbeständigkeit, insbesondere bei Einwirkung von Chemikalien, und ein gutes antielektrostatisches Verhalten. Zudem weisen sie eine hohe Farbstabilität auf, beispielsweise auch infolge der hervorragenden Beständigkeit gegen Vergilben und Verspröden. Die erfindungsgemäßen Formkörper aus den erfindungsgemäßen thermoplastischen Formmassen zeigen sowohl bei tiefen Temperaturen wie auch nach längerer Wärmeeinwirkung keinen signifikanten Verlust an Zähigkeit bzw. Schlagzähigkeit, die auch bei der Belastung durch UV-Strahlen erhalten bleibt. Auch die Zugfestigkeit bleibt erhalten. Zudem zeigen sie ein ausgewogenes Verhältnis zwischen Steifigkeit und Zähigkeit.

Die Erfindung wird anhand der nachfolgenden Beispiele näher erläutert.

## BEISPIEL 1

*Herstellung von Pfropfcopolymerisat (A)*

(a1) 160 g eines Monomerengemisches aus 79 Teilen Butylacrylat, einem Teil Maleinsäureanhydrid und zwei Teilen Polymethylmethacrylat mit einem Zahlenmittel des Molekulargewichts von 320000 umgeestert mit Allylalkohol und einem Umesterungsgrad von 12 Gew.-%, bezogen auf das eingesetzte Polymethylmethacrylat, wurden in 1500 g Wasser unter Zusatz von 5 g des Natriumsalzes einer $C_{12-18}$-Paraffinsulfonsäure, 3 g Kaliumpersulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 48 g des Monomerengemisches zugegeben. Nach Beendigung der Monomerzugabe wurde noch 1 Stunde bei 60°C nachreagieren gelassen.

(a2) 2100 g der in (a1) hergestellten Emulsion wurden mit 1150 g Wasser und 2,7 g Kaliumpersulfat gemischt und unter Rühren auf 65°C erwärmt. Sodann wurden im Verlauf von 3 Stunden 500 g eines Monomerengemisches zudosiert, bestehend aus 73 Gewichtsteilen Styrol, 25 Gewichtsteilen Acrylnitril und 2 Gewichtsteilen Dimethylaminoethylacrylat. Nach Beendingung der Zugabe wurde die Emulsion noch zwei Stunden bei 65°C gehalten. Das erhaltene Pfropfpolymerisat wurde sodann in einer 15% igen wäßrigen $CaCl_2$-Lösung aus der Emulsion gefällt, mit Wasser gewaschen und im Luftstrom bei 40 bis 65°C getrocknet. Der Pfropfgrad des Pfropfcopolymerisats betrug 39%, die Teilchengröße 100 nm.

## BEISPIEL 2

*Herstellung von Pfropfcopolymerisat (a)*

(a1) 160 g n-Butylacrylat und 26 g des Vernetzers aus Beispiel 1 wurden in 1500 g Wasser unter Zusatz von 1 g des Natriumsalzes einer $C_{12-18}$-Paraffinsulfonsäure, 3 g Kaliumpersulfat, 3 g Natriumhyrogencarbonat und 1,5 g Natriumpyrophosphat unter Rühren auf 60°C erwärmt. Zehn Minuten nach dem Anspringen der Polymerisationsreaktion wurde innerhalb von drei Stunden eine Mischung aus 800 g n-Butylacrylat und 20 g des Vernetzers zugegeben.
Nach Beendingung der Monomerzugabe wurde noch eine Stunde nachreagieren gelassen. Die erhaltene Emulsion des Acrylatpolymerisates hatte einen Feststoffgehalt von etwa 40 Gew.-%.

(a2) 1500 g der Emulsion aus (a1) wurden mit 400 g einer Mischung aus Styrol und Acrylnitril (Gewichtsverhältnis 75:25) und 600 g Wasser gemischt und unter Rühren nach Zusatz von weiteren 0,5 g Kaliumpersulfat und 0,5 g Lauroylperoxid vier Stunden auf 65°C erhitzt. Nach Beendigung der Pfropfmischpolymerisation wurde das Polymerisat mit einer $CaCl_2$-Lösung gefällt bei 95°C, mit Wasser gewaschen und im warmen Luftstrom getrocknet. Der Pfropfgrad betrug 35%, die Teilchengröße 90 nm.

*BEISPIEL 3*

Das Verfahren gemäß Beispiel 1 wurde ausgeführt, jedoch wurde als Vernetzer Butadienylpolyethylen verwendet, das aus einem Polyethylenrückgrad mit einem Zahlenmittel des Molekulargewichts von 550000 und einem Verzweigungsgrad von 50/1000 C bestand, das mit einem Anteil von 55 Gew.-% bezogen auf das eingesetzte Polyethylen, gepfropft war mit Butadien.

*BEISPIEL 4*

Das Verfahren gemäß Beispiel 2 wurde ausgeführt, jedoch wurde der Vernetzer aus Beispiel 3 verwendet.

*BEISPIEL 5*

Das Verfahren gemäß Beispiel 1 wurde ausgeführt, jedoch wurde als Vernetzer ein Polyvinylalkohol mit einem Zahlenmittel des Molekulargewichts von 550000 verwendet, der verethert war mit 8 Gew.-% Allylchlorid, bezogen auf die Menge des eingesetzten Polyvinylalkohols.

*BEISPIEL 6*

Das Verfahren gemäß Beispiel 2 wurde ausgeführt, jedoch wurde der Vernetzer aus Beispiel 5 verwendet.

*BEISPIEL 7*

Das Verfahren gemäß Beispiel 1 wurde ausgeführt, jedoch wurde als Vernetzer ein Polyvinylalkohol mit einem Zahlenmittel des Molekulargewichts von 100000 eingesetzt, der zu 15 Gew.-% umgesetzt war mit Methacrylsäureanhydrid, bezogen auf die Ausgangsmenge von Polyvinylalkohol.

*BEISPIEL 8*

Das Verfahren gemäß Beispiel 2 wurde ausgeführt, jedoch wurde ein Vernetzer gemäß Beispiel 7 eingesetzt.

*BEISPIEL 9*

*Herstellung von Copolymerisat (B)*

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 Gew.-% bezogen auf das Copolymerisat, und eine Viskositätszahl von 80 ml/g.

*BEISPIEL V 10*

**(VERGLEICHSBEISPIEL)**

Das Verfahren gemäß Beispiel 1 wurde wiederholt, jedoch wurde statt des Vernetzers eine entsprechende Menge n-Butylacrylat eingesetzt.

**HERSTELLUNG DER FORMMASSEN**

Aus 40 Gew.-% der Polymerisate (A) gemäß Beispielen 1 bis 8 und V 10 und 60 Gew.-% des Polymerisats aus Beispiel 9 wurden in einem Schnekkenextruder bei einer Temperatur von 200 bis 230°C Formmassen hergestellt. Aus den Formmassen wurden Probekörper spritzgegossen nach den in DIN 1677 angegebenen Einspritzbedingungen. Bei den Probekörpern handelte es sich um Normkleinstäbe zur Messung der Kerbschlagzähigkeit.

An den Probekörpern wurde die Kerbschlagzähigkeit in kJ/m$^2$ gemessen gemäß DIN 53354. Die Ergebnisse für die Kerbschlagzähigkeit bei 23°C sind in Tabelle 1 wiedergegeben, für eine Temperatur von 0°C in Tabelle 2. Die in Klammern angegebenen Werte beziehen sich auf die Vergleichsformmasse, die Vergleichskomponente A aus Beispiel V 10 enthielt.

## TABELLE 1

### Kerbschlagzähigkeit in kJ/m$^2$ bei 23°C

| Komponente A aus Beispiel | Einspritztemperatur | | |
|---|---|---|---|
| | 220°C | 260°C | 280°C |
| 1 | -- | 36 (26) | 36 (26) |
| 2 | 38 (26) | -- | -- |
| 3 | -- | 36 (26) | 36 (26) |
| 4 | 38 (26) | -- | -- |
| 5 | -- | 34 (26) | 32 (26) |
| 6 | 32 (26) | -- | -- |
| 7 | -- | 36 (26) | 36 (26) |
| 8 | 34 (26) | -- | -- |

## TABELLE 2

### Kerbschlagzähigkeit in kJ/m$^2$ bei O°C

| Komponente A aus Beispiel | Einspritztemperatur | | |
|---|---|---|---|
| | 220°C | 260°C | 280°C |
| 1 | -- | 36 (14) | 36 (14) |
| 2 | 29 (14) | -- | -- |
| 3 | -- | 29 (14) | 30 (14) |
| 4 | 29 (14) | -- | -- |
| 5 | -- | 22 (14) | 24 (14) |
| 6 | 24 (14) | -- | -- |
| 7 | -- | 28 (14) | 26 (14) |
| 8 | 28 (14) | -- | -- |

Aus den in den Tabellen angegebenen Werten geht hervor, daß die erfindungsgemäßen Formmassen eine wesentlich bessere Kerbschlagzähigkeit aufweisen als die bekannten Formmassen.

**Patentansprüche**

1.  Verwendung von Verbindungen der allgemeinen Formel (I)

$$H(-CH_2-CR^1R^2)_m(-CH_2-CR^1R^3)_n-H \qquad\qquad (I)$$

in der
R$^1$ H oder Methyl
R$^2$ -C(O)-Y-R$^4$ mit R$^4$ H, Methyl, Ethyl oder Allyl
R$^3$ -C(O)-Y-Allyl
Y O oder NH
oder
R$^1$ H oder C$_{1-20}$-Alkyl
R$^2$ H
R$^3$ (-CH$_2$-CR$^5$=CR$^6$-CH$_2$)$_p$-H mit R$^5$, R$^6$
unabhängig H, Methyl, Ethyl, Chlor, p = 1 - 100
oder
R$^1$ H
R$^2$ OH oder O-Allyl
R$^3$ O-Allyl

oder

$R^1$ H

$R^2$ OH oder $R^3$

$R^3$ (Meth)acrylat, -O-C(O)-CH=CH-COOH oder -O-C(O)-CH$_2$-C(=CH$_2$)-COOH

bedeutet und m eine ganze Zahl von 5 bis 500000 und n eine ganze Zahl von 2 bis 100000 ist, wobei vorzugsweise m eine ganze Zahl von 500 bis 50000 ist und das Verhältnis n:m 1:50 bis 10:1 beträgt, als Vernetzer in teilchenförmigen Emulsionspolymerisaten mit einer Glasübergangstemperatur von unterhalb 0°C und einer mittleren Teilchengröße (Gewichtsmittel) von 50 bis 1000 nm.

2. Teilchenförmiges Emulsionspolymerisat mit einer Glasübergangstemperatur unterhalb von 0°C und einer mittleren Teilchengröße (Gewichtsmittel) von 50 bis 1000 nm, das 0,5 bis 30 Gew.-% mindestens eines Vernetzers enthält, wie er in Anspruch 1 definiert ist.

3. Emulsionspolymerisat nach Anspruch 2, **dadurch gekennzeichnet, daß** es ein Pfropfcopolymerisat, aufgebaut aus einer teilchenförmigen Pfropfgrundlage A1 mit einer Glasübergangstemperatur unterhalb von 0°C, die 1 bis 20 Gew.-% mindestens eines Vernetzers enthält, wie er in Anspruch 1 definiert ist, und einer Pfropfauflage A2 aus vinylaromatischen und/oder ethylenisch ungesättigten Monomeren ist.

4. Thermoplastische Formmasse, enthaltend, bezogen auf die Summe der Mengen der Komponenten A und B, und ggf. C und/oder D, die ingesamt 100 Gew.-% ergibt,

   a: 1 bis 99 Gew.-% eines teilchenförmigen Emulsionspolymerisats nach Anspruch 2 oder 3 als Komponente A,

   b: 1 bis 99 Gew.-% mindestens eines amorphen oder teilkristallinen Polymerisats als Komponente B,

   c: 0 bis 50 Gew.-% Polycarbonate als Komponente C und

   d: 0 bis 50 Gew.-% faser- oder teilchenförmige Füllstoffe oder deren Gemische als Komponente D.

5. Formmasse nach Anspruch 4, wobei es sich bei Komponente A um ein Pfropfcopolymerisat handelt aus

   a1:  1 bis 99 Gew.-%, einer teilchenförmigen Pfropfgrundlage A1 aus den Monomeren, bezogen auf A1

   a11:  50 bis 99 Gew.-% eines C$_{1-8}$-Alkylesters der Acrylsäure, als Komponente A11,

   a12:  1 bis 20 Gew.-% mindestens eines Vernetzers, wie er in Anspruch 1 definiert ist, als Komponente A12,

   a13:  0 bis 49 Gew.-% der Komponenten A21 und/oder A22 und/oder Maleinsäureanhydrid als Komponente A13,

   a14:  0 bis 10 Gew.-% mindestens eines weiteren polyfunktionellen vernetzenden Monomeren als Komponente A14,

   wobei die Summe der Mengen der Komponenten A11, A12 und ggf. A13 und/oder A14 100 Gew.-% ergibt,

   a2:  1 bis 99 Gew.-% einer Pfropfauflage A2 aus den Monomeren, bezogen auf A2,

   a21:  40 bis 100 Gew.-% Einheiten eines vinylaromatischen Monomeren als Komponente A21 und

   a22:  bis 60 Gew.-% Einheiten eines ethylenisch ungesättigten Monomeren als Komponente A22,

   wobei die Pfropfauflage A2 aus mindestens einer Pfropfhülle besteht.

6. Formmasse nach Anspruch 4 oder 5, wobei es sich bei der Komponenten B um ein Copolymerisat handelt aus

   b1:  40 - 100 Gew.-% Einheiten eines vinylaromatischen Monomeren als Komponente B1,

   b2:  bis 60 Gew.-% Einheiten eines ethylenisch ungesättigten Monomeren als Komponente B2.

7. Verfahren zur Herstellung von Formmassen nach einem der Ansprüche 4 bis 6, wobei die Komponenten A, B und ggf. C und/oder D durch gemeinsames Extrudieren, Kneten oder Verwalzen bei einer Temperatur von 180 bis 400°C gemischt werden.

8. Verwendung von Formmassen nach einem der Ansprüche 4 bis 6 zur Herstellung von Formkörpern.

9. Formkörper aus einer Formmasse nach einem der Ansprüche 4 bis 6.

10. Verfahren zur Herstellung von Formkörpern nach Anspruch 9 durch Thermoformen, Extrudieren, Spritzgießen, Kalandrieren, Hohlkörperblasen, Pressen, Preßsintern, Tiefziehen oder Sintern einer Formmasse nach einem der Ansprüche 4 bis 6.

**Claims**

1. The use of a compound of the formula (I)

$$H(-CH_2-CR^1R^2)_m(-CH_2-CR^1R^3)_n-H \qquad\qquad (I)$$

where
  $R^1$ is H or methyl,
  $R^2$ is -C(O)-Y-R$^4$, where R$^4$ is H, methyl, ethyl or allyl,
  $R^3$ is -C(O)-Y-allyl and
  Y is O or NH,
or
  $R^1$ is H or C$_1$-C$_{20}$-alkyl,
  $R^2$ is H and
  $R^3$ is (-CH$_2$-CR$^5$=CR$^6$-CH$_2$)$_p$-H, where R$^5$ and R$^6$ independently are each H, methyl, ethyl or chlorine and p
is 1 - 100,
or
  $R^1$ is H,
  $R^2$ is OH or O-allyl and
  $R^3$ is O-allyl,
or
  $R^1$ is H,
  $R^2$ is OH or R$^3$ and
  $R^3$ is (meth)acrylate, -O-C(O)-CH=CH-COOH or -O-C(O)-CH$_2$-C(=CH$_2$)-COOH,
and m is an integer from 5 to 500,000 and n is an integer from 2 to 100,000, preferably m being an integer from 500 to 50,000 and the ratio n:m being from 1:50 to 10:1, as a crosslinking agent in particulate emulsion polymers having a glass transition temperature below 0°C and a mean particle size (weight average) of from 50 to 1000 nm.

2. A particulate emulsion polymer having a glass transition temperature below 0°C and a mean particle size (weight average) of from 50 to 1000 nm, which contains from 0.5 to 30% by weight of at least one crosslinking agent as defined in claim 1.

3. An emulsion polymer as claimed in claim 2, which is a graft copolymer composed of a particulate grafting base A1 having a glass transition temperature below 0°C, which contains from 1 to 20% by weight of at least one crosslinking agent as defined in claim 1, and a graft layer A2 comprising vinylaromatic and/or ethylenically unsaturated monomers.

4. A thermoplastic molding material containing, based on the sum of the amounts of components A and B and, if required, C or D, which altogether gives 100% by weight,

  a: from 1 to 99% by weight of a particulate emulsion polymer as claimed in claim 2 or 3 as component A,

  b: from 1 to 99% by weight of at least one amorphous or semicrystalline polymer as component B,

c: from 0 to 50% by weight of polycarbonates as component C, and

d: from 0 to 50% by weight of fibrous or particulate fillers or mixtures thereof as component D.

**5.** A molding material as claimed in claim 4, wherein component A is a graft copolymer of

a1: from 1 to 99% by weight of a particulate grafting base A1 comprising the monomers, based on A1,

all: from 50 to 99% by weight of a $C_1$-$C_8$-alkyl ester of acrylic acid as component A11,

a12: from 1 to 20% by weight of at least one crosslinking agent as defined in claim 1 as component A12,

a13: from 0 to 49% by weight of components A21 or A22 or maleic anhydride as component A13, and

a14: from 0 to 10% by weight of at least one further polyfunctional crosslinking monomer as component A14,

the sum of the amounts of components A11, A12 and, if required, A13 or A14 being 100% by weight,

a2: from 1 to 99% by weight of a graft layer A2 comprising the monomers, based on A2,

a21: from 40 to 100% by weight of units of a vinylaromatic monomer as component A21, and

a22: up to 60% by weight of units of an ethylenically unsaturated monomer as component A22,

the graft layer A2 comprising at least one graft shell.

**6.** A molding material as claimed in claim 4 or 5, wherein component B is a copolymer of

b1: 40 to 100% by weight of units of a vinylaromatic monomer as component B1, and

b2: up to 60% by weight of units of an ethylenically unsaturated monomer as component B2.

**7.** A process for the preparation of a molding material as claimed in any of claims 4 to 6, wherein components A, B and, if required, C or D are mixed by extruding, kneading or roll-milling them together at from 180 to 400□C.

**8.** The use of a molding material as claimed in any of claims 4 to 6 for the production of a molding.

**9.** A molding comprising a molding material as claimed in any of claims 4 to 6.

**10.** A process for the production of a molding as claimed in claim 9 by thermoforming, extrusion, injection molding, calendering, blow molding, compression molding, pressure sintering or sintering a molding material as claimed in any of claims 4 to 6.

**Revendications**

**1.** Utilisation de composés de la formule générale (I)

$$H(-CH_2-CR^1R^2)_m(-CH_2-CR^1R^3)_n-H \qquad\qquad (I)$$

dans laquelle

$R^1$ représente H ou du méthyle,
$R^2$ représente -C(O)-Y-$R^4$, où $R^4$ est H, du méthyle, de l'éthyle ou de l'allyle,
$R^3$ représente -C(O)-Y-allyle,
Y représente O ou NH,

ou

R$^1$ représente H ou C$_{1-20}$-alkyle,
R$^2$ représente H,
R$^3$ représente (-CH$_2$-CR$^5$=CR$^6$-CH$_2$)$_p$-H où R$^5$ et R$^6$ représentent indépendamment H, du méthyle, de l'éthyle, du chlore et p = 1-100,

ou

R$^1$ représente H,
R$^2$ représente OH ou O-allyle,
R$^3$ représente O-allyle,

ou

R$^1$ représente H,
R$^2$ représente OH ou R$^3$,
R$^3$ représente un (méth)acrylate, -O-C(O)-CH=CH-COOH ou -O-C(O)-CH$_2$-C(=CH$_2$)-COOH,

et m est un nombre entier de 5 à 500.000 et n est un nombre entier de 2 à 100.000, m étant de préférence entier de 500 à 50.000 et le rapport n/m étant de 1/50 à 10/1,
comme agents de réticulation dans des produits de polymérisation en émulsion particulaires ayant une température de transition vitreuse inférieure à 0°C et une taille moyenne des particules (moyenne pondérale) de 50 à 1000 nm.

2. Produit de polymérisation en émulsion particulaire présentant une température de transition vitreuse inférieure à 0°C et une taille moyenne des particules (moyenne pondérale) de 50 à 1000 nm, qui contient 0,5 à 30 % en poids d'au moins un agent de réticulation tel que défini dans la revendication 1.

3. Produit de polymérisation en émulsion suivant la revendication 2, **caractérisé en ce qu'**il est un copolymère de greffage, constitué d'une base de greffage particulaire A1 présentant une température de transition vitreuse inférieure à 0°C, qui contient 1 à 20 % en poids d'au moins un agent de réticulation tel que défini dans la revendication 1, et d'une couche de greffage A2 à base de monomères vinylaromatiques et/ou éthyléniquement insaturés.

4. Masse de façonnage thermoplastique, contenant, par rapport à la somme des quantités des composants A et B et éventuellement C et/ou D, qui donnent au total 100 % en poids,

   a: 1 à 99 % en poids d'un produit de polymérisation en émulsion particulaire suivant l'une des revendication 2 et 3, comme composant A,
   b: 1 à 99 % en poids d'au moins un polymère amorphe ou partiellement cristallin, comme composant B,
   c: 0 à 50 % en poids de polycarbonates, comme composant C, et
   d : 0 à 50 % en poids de matières de remplissage fibreuses ou particulaires ou de leurs mélanges, comme composant D.

5. Masse de façonnage suivant la revendication 4, dans laquelle, en ce qui concerne le composant A, il s'agit d'un copolymère de greffage constitué de

   a1 : 1 à 99 % en poids d'une base de greffage particulaire A1, à base des monomères, par rapport à A1,
   a11 : 50 à 99 % en poids d'un ester alkylique en C$_1$-C$_8$ de l'acide acrylique, comme composant A11,
   a12: 1 à 20 % en poids d'au moins un agent de réticulation tel que défini dans la revendication 1, comme composant A12,
   a13: 0 à 49 % en poids des composants A21 et/ou A22 et/ou d'anhydride maléique, comme composant A13,
   a14: 0 à 10% en poids d'au moins un autre monomère réticulant, polyfonctionnel, comme composant A14,

   la somme des quantités des composants A11, A12 et éventuellement A13 et/ou A14 étant de 100 % en poids,

   a2 : 1 à 99 % en poids d'une couche de greffage A2 à base des monomères, par rapport à A2,
   a21 : 40 à 100 % en poids d'unités d'un monomère vinylaromatique, comme composant A21, et
   a22: jusqu'à 60 % en poids d'unités d'un monomère éthyléniquement insaturé, comme composant A22,

la couche de greffage A2 étant constituée d'au moins une enveloppe de greffage.

6. Masse de façonnage suivant l'une des revendications 4 et 5, dans laquelle, en ce qui concerne le composant B, il s'agit d'un copolymère constitué de

   b1 :   40-100 % en poids d'unités d'un monomère vinylaromatique, comme composant B1,
   b2 :   jusqu'à 60 % en poids d'unités d'un monomère éthyléniquement insaturé, comme composant B2.

7. Procédé de préparation de masses de façonnage suivant l'une des revendications 4 à 6, dans lesquels les composants A, B et éventuellement C et/ou D sont mélangés par une extrusion, un pétrissage ou un laminage commun à une température de 180 à 400°C.

8. Utilisation de masses de façonnage suivant l'une des revendications 4 à 6, pour la fabrication de corps façonnés.

9. Corps façonnés à base d'une masse de façonnage suivant l'une des revendications 4 à 6.

10. Procédé de fabrication de corps façonnés suivant la revendication 9, par thermoformage, extrusion, coulée par injection, calandrage, soufflage de corps creux, pressage, frittage sous pression, emboutissage ou frittage d'une masse de façonnage suivant l'une des revendications 4 à 6.